# EUROPEAN PATENT APPLICATION

(11) **EP 4 379 949 A1**
(43) Date of publication of application: **05.06.2024**
(21) Application number: 22919501.1
(22) Date of filing: 14.01.2022
(51) Int. Cl.: H01M 50/627

(54) **BATTERY CELL, BATTERY, ELECTRIC DEVICE, METHOD FOR MANUFACTURING BATTERY CELL, AND DEVICE**

(71) Applicant: Contemporary Amperex Technology Co., Limited, Ningde, Fujian 352100 (CN)
(72) Inventor: FANG, Kun, Ningde, Fujian 352100 (CN); GUO, Zhijun, Ningde, Fujian 352100 (CN); JIN, Haizu, Ningde, Fujian 352100 (CN)
(74) Representative: Gong, Jinping
(86) International application number: PCT/CN2022/072161
(87) International publication number: WO 2023/133853

(57) **Abstract**

The present application relates to the technical field of batteries, and in particular, to a battery cell, a battery, a power consuming apparatus, and a manufacturing method and apparatus for a battery cell. The battery cell comprises: a shell comprising a wall portion; an electrode terminal arranged on the wall portion, the electrode terminal having a filling hole penetrating in an axial direction of the electrode terminal, the filling hole comprising a first hole section and a second hole section, the second hole section being closer to the interior of the battery cell than the first hole section, and the second hole section having a smaller hole diameter than the first hole section; and a sealing member configured to seal the filling hole, the sealing member comprising a body and a limiting protrusion, the body fitting with the first hole section in a sealing manner, the body comprising a first surface and a second surface arranged opposite each other in the axial direction, the first surface facing the interior of the battery cell, the second surface facing away from the interior of the battery cell, and the limiting protrusion being formed on the first surface and fitting with the second hole section. In this way, the body is not easy to tilt or shift so as to improve the sealing performance, thereby prolonging the service life and improving the safety of the battery cell.

## Description

### Technical Field

The present application relates to the technical field of batteries, and in particular, to a battery cell, a battery, a power consuming apparatus, and a manufacturing method and apparatus for a battery cell.

### Background Art

In the pursuit of energy conservation and emission reduction, batteries are widely used in power consuming apparatuses, such as mobile phones, computers, and electric vehicles, to provide electric energy to the power consuming apparatuses. The service life and safety of the batteries are important to the usage performance of the power consuming apparatuses.

### Summary of the Invention

The present application aims to provide a battery cell, a battery, a power consuming apparatus, and a manufacturing method and apparatus for a battery cell, so as to prolong the service life and improve the safety of the battery.

The embodiments of the present application are implemented as below.

In a first aspect, an embodiment of the present application provides a battery cell, comprising: a shell comprising a wall portion; an electrode terminal provided on the wall portion, the electrode terminal having a filling hole penetrating in an axial direction of the electrode terminal, the filling hole comprising a first hole section and a second hole section, the second hole section being closer to the interior of the battery cell than the first hole section, and the second hole section having a smaller hole diameter than the first hole section; and a sealing member configured to seal the filling hole, the sealing member comprising a body and a limiting protrusion, the body fitting with the first hole section in a sealing manner, the body comprising a first surface and a second surface arranged opposite each other in the axial direction, the first surface facing the interior of the battery cell, the second surface facing away from the interior of the battery cell, and the limiting protrusion being formed on the first surface and fitting with the second hole section.

In the technical solution of the present application, the body and the limiting protrusion are connected together to form the sealing member, and the limiting protrusion is blocked by an inner wall of the second hole section and is thus not easy to shift or tilt, so that the body is also not easy to tilt and shift to ensure the body to fit with the first hole section in a sealing manner, so as to improve the sealing performance of the filling hole to alleviate the problem of liquid leakage of the battery cell, thereby prolonging the service life and improving the safety of the battery cell.

In an embodiment of the present application, the body further comprises a peripheral face that connects the first surface and the second surface, the peripheral face being welded to a hole wall of the first hole section.

In the above technical solution, the sealing member is connected to the electrode terminal by means of welding, which is high in machining speed and can improve the production efficiency.

In an embodiment of the present application, the second surface comprises a central region and an edge region, the central region being configured to be connected to a busbar component, the second surface being provided with a first recess that is arranged around the periphery of the central region, and the edge region being arranged around the periphery of the first recess.

In the above technical solution, the sealing member is not only configured to seal the filling hole, but also configured to realize the electrical connection between the electrode terminal and the busbar component; and the first recess is provided between the central region and the edge region of the second surface, the edge region is connected to a first peripheral face of the body, the first recess separates the central region from the edge region, and the first recess is configured to release welding stress between the first peripheral face and an inner wall of the first hole section so as to prevent deformation of the central region, which can ensure that the central region is flat such that pseudo solder is less likely to occur during welding of the flat central region and the busbar component, and can ensure the overcurrent stability of the electrode terminal and the busbar component.

On the other hand, the central region of the second surface is configured to be connected to the busbar component, which can reduce the area of the part of the electrode terminal (i.e., the side of the electrode terminal that faces away from the battery cell) which is originally connected to the busbar component, so that the hole diameter of the filling hole can be set larger, thereby effectively improving the filling efficiency.

In an embodiment of the present application, the projection of the limiting protrusion on the second surface in the axial direction is located in the central region.

In the above technical solution, the limiting protrusion is arranged at a position corresponding to the position of the central region, which strengths the structural strength of the central region and thus further has the function of preventing deformation of the central region.

In an embodiment of the present application, the edge region is recessed towards the interior of the battery cell in the axial direction relative to the central region.

In the above technical solution, the edge region of the body is configured to recess relative to the adjacent central region, which prevents a weld seam from being higher than the central region in the axial direction so as to protect the weld seam, and also prevents the raised weld seam from interfering with the busbar component so as to avoid affection to the connection between the busbar component and the central region.

In an embodiment of the present application, the electrode terminal comprises a first end face that is perpendicular to the axial direction and faces away from the interior of the battery cell, and the central region is flush with the first end face.

In the above technical solution, the sealing member does not occupy additional space outside the battery cell, and a central region of the sealing member is also not lower than the first end face, which is conducive to fitting between the central region and a surface of the busbar component, so as to ensure the stable and reliable connection between the central region and the busbar component and improve the overcurrent capacity.

In an embodiment of the present application, the peripheral face is a first conical face that has a diameter gradually decreasing in the axial direction and towards the interior of the battery cell, and the hole wall of the first hole section is a second conical face that matches the first conical face.

In the above technical solution, the peripheral face of the body and the hole wall of the first hole section are both configured as a conical face that has the function of guiding the sealing member into the filling hole to facilitate assembly. During laser welding, the second conical face can also block and reflect laser light that propagates in the axial direction, so as to alleviate the problem of the laser light entering the battery cell through a gap between the sealing member and the filling hole to prevent burning of functional components inside the battery cell.

In an embodiment of the present application, the center of the second surface is provided with a second recess.

In the above technical solution, the second recess can serve as a support position or a marking position for a welding apparatus, so that the welding of the body and the electrode terminal can be completed by allowing a welding head of the welding apparatus to rotate one circle along the outer circle of the edge region and with the second recess as a pivot or the center, which is convenient for welding.

In an embodiment of the present application, the second recess is hemispherical.

In the above technical solution, the inner wall of the second recess is a spherical face, which is conducive to rotation of the welding apparatus in the second recess when the second recess serves as the support position for the welding apparatus, so as to ensure smooth welding operation and further facilitate welding.

In an embodiment of the present application, the filling hole further comprises a third hole section that is closer to the interior of the battery cell than the second hole section, the third hole section having a smaller hole diameter than the second hole section, and the limiting protrusion covering the third hole section.

In the above technical solution, the third hole section is provided, so that when an electrolyte overflows from the third hole section, the second hole section can hold the overflowing electrolyte, and thus the electrolyte is not easy to overflow to the first hole section, which effectively alleviates the corrosion of the electrolyte to the weld seam so as to improve the sealing effect.

In an embodiment of the present application, the limiting protrusion comprises a third surface that is the side of the limiting protrusion facing the interior of the battery cell in the axial direction; and a transition connection face is formed between a hole wall of the second hole section and a hole wall of the third hole section, and the transition connection face and the third surface are arranged opposite each other and have a gap therebetween.

In the above technical solution, providing the gap between the third surface and the transition connection face allows the length of the limiting protrusion in the axial direction and the length of the second hole section to have a certain manufacturing tolerance to prevent over-positioning, so as to ensure that the peripheral face of the body fits with the hole wall of the first hole section and ensure that the first surface of the body can fit with a step face, thereby improving the sealing performance between the body and the electrode terminal.

In an embodiment of the present application, the battery cell further comprises an electrode assembly, and a first tab is formed at the end of the electrode assembly that faces the wall portion; and the transition connection face comprises a main body region and a welding region connected to each other, the welding region being configured to be welded to the first tab, the main body region being connected to the hole wall of the second hole section, the welding region being connected to the hole wall of the third hole section, a first gap being provided between the main body region and the third surface, and a second gap being provided between the welding region and the third surface, the second gap being greater than the first gap.

In the above technical solution, the welding region is recessed towards the interior of the battery cell in the axial direction relative to the main body region, so that the welding region is further away from the third surface of the limiting protrusion to allow a weld seam formed in the welding region to avoid the limiting protrusion, so as to avoid affecting the positioning accuracy of the sealing member, thereby ensuring the sealing performance of the sealing member.

In a second aspect, an embodiment of the present application provides a battery comprising the aforementioned battery cell.

In the battery according to an embodiment of the present application, the battery cell of the battery has good sealing performance and is not easy to leak, and the battery has a long service life and high safety.

In a third aspect, an embodiment of the present application provides a power consuming apparatus comprising the aforementioned battery.

The battery of the power consuming apparatus according to the present application has a long service life and high safety, and the power consuming apparatus has good durability and is safe to use.

In a fourth aspect, an embodiment of the present application provides a manufacturing method for a battery cell, the manufacturing method comprising: providing a shell comprising a wall portion; providing an electrode terminal having a filling hole penetrating in an axial direction of the electrode terminal, the filling hole comprising a first hole section and a second hole section, the second hole section having a smaller hole diameter than the first hole section; providing a sealing member comprising a body and a limiting protrusion, the body comprising a first surface and a second surface arranged opposite each other, and the limiting protrusion being formed on the first surface; and arranging the electrode terminal on the wall portion to allow the second hole section to be closer to the interior of the battery cell than the first hole section, and sealing the filling hole with the sealing member to allow the body to fit with the first hole section in a sealing manner and allow the limiting protrusion to fit with the second hole section.

In a fifth aspect, an embodiment of the present application provides a manufacturing apparatus for a battery cell, the manufacturing apparatus comprising: a first provision device configured to provide a shell comprising a wall portion; a second provision device configured to provide an electrode terminal having a filling hole penetrating in an axial direction of the electrode terminal, the filling hole comprising a first hole section and a second hole section, the second hole section having a smaller a hole diameter than the first hole section; a third provision device configured to provide a sealing member comprising a body and a limiting protrusion, the body comprising a first surface and a second surface arranged opposite each other, and the limiting protrusion being formed on the first surface; and an assembly device configured to arrange the electrode terminal on the wall portion to allow the second hole section to be closer to the interior of the battery cell than the first hole section, and configured to seal the filling hole with the sealing member to allow the body to fit with the first hole section in a sealing manner and allow the limiting protrusion to fit with the second hole section.

### Brief Description of the Drawings

In order to more clearly describe the technical solutions of embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any creative effort.
FIG. 1 is a schematic diagram of a vehicle according to an embodiment of the present application;
FIG. 2 is an exploded view of a battery according to an embodiment of the present application;
FIG. 3 is a schematic external structural diagram of a battery cell according to an embodiment of the present application;
FIG. 4 is a top view of a battery cell according to an embodiment of the present application;
FIG. 5 is a schematic internal structural diagram of a battery cell according to an embodiment of the present application;
FIG. 6 is a partial enlarged view of FIG. 5;
FIG. 7 is an exploded view of an electrode terminal and a sealing member according to an embodiment of the present application;
FIG. 8 is an exploded view of a battery cell according to an embodiment of the present application;
FIG. 9 is a schematic flowchart of a manufacturing method for a battery cell according to an embodiment of the present application; and
FIG. 10 is a schematic block diagram of a manufacturing apparatus for a battery cell according to an embodiment of the present application.

List of reference signs: 1000 - vehicle; 100 - battery; 200 - motor; 300 - controller; 101 - case; 1011 - first case portion; 1012 - second case portion; 102 - battery cell; 1 - shell; 11 - bottom wall; 12 - side wall; 13 - end cap; 2 - electrode terminal; 21 - first end face; 22 - second end face; 23 - filling hole; 231 - first hole section; 232 - second hole section; 233 - third hole section; 234 - step face; 235 - transition connection face; 2351 - main body region; 2352 - welding region; 2361 - first gap; 2362 - second gap; 3 - sealing member; 31 - body; 311 - first surface; 312 - second surface; 3121 - central region; 3122 - edge region; 3123 - first recess; 3124 - second recess; 313 - first peripheral face; 32 - limiting protrusion; 321 - third surface; 322 - second peripheral face; 4 - electrode assembly; 41 - first tab; 42 - second tab; 5 - first adapter; 6 - second adapter; 7 - manufacturing apparatus; 71 - first provision device; 72 - second provision device; 73 - third provision device; 74 - assembly device; P - axial direction; R - radial direction.

### Detailed Description of Embodiments

In order to make the objectives, technical solutions and advantages of the embodiments of the present application clearer, the technical solutions in the embodiments of the present application will be described clearly below with reference to the accompanying drawings in the embodiments of the present application. Obviously, the embodiments described are some of, rather than all of, the embodiments of the present application. All other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application and in the foregoing brief description of the accompanying drawings are intended to cover non-exclusive inclusion. The terms "first", "second", etc. in the specification and the claims of the present application and in the foregoing drawings are used to distinguish between different objects, rather than describing a specific order or a primary-secondary relationship.

In the present application, the phrase "embodiment" mentioned means that the specific features, structures and characteristics described in conjunction with the embodiments may be included in at least one embodiment of the present application. The phrase at various places in the specification does not necessarily refer to the same embodiment, or an independent or alternative embodiment exclusive of another embodiment.

In the description of the present application, it should be noted that, the terms "mounting", "connected", "connection", or "attachment" should be interpreted in a broad sense, unless explicitly defined and limited otherwise. For example, they may be a fixed connection, a detachable connection, or an integral connection; or may be a direct connection, an indirect connection by means of an intermediate medium, or communication between interiors of two elements. For those of ordinary skill in the art, the specific meanings of the foregoing terms in the present application may be understood according to specific circumstances.

In the present application, the term "and/or" is only an association relationship describing associated objects and represents that there may be three relationships. For example, the expression A and/or B may represent three situations: A alone, both A and B, and B alone. In addition, the character "/" in the present application generally indicates an "or" relationship between the contextual objects.

In the embodiments of the present application, the same reference signs denote the same components, and for the sake of brevity, the detailed description of the same components is omitted in various embodiments. It should be understood that the dimensions, such as thickness, length and width, of the various components in the embodiments of the present application illustrated in the drawings, as well as the dimensions, such as overall thickness, length and width, of an integrated device are merely illustrative and should not be construed as any limitation to the present application.

The phrase "a plurality of' appearing in the present application means two or more (including two).

In the present application, the battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, etc., which is not limited in the embodiments of the present application.

The battery mentioned in the embodiments of the present application refers to a single physical module which comprises one or more battery cells to provide a higher voltage and capacity. For example, the battery mentioned in the present application may comprise a battery module, a battery pack, etc. The battery generally comprises a case for packaging one or more battery cells. The case can prevent affection of liquid or other foreign matters on the charging or discharging of the battery cell.

The battery cell comprises an electrode assembly and an electrolyte, the electrode assembly comprising a positive electrode plate, a negative electrode plate, and a separator. The battery cell works primarily by moving metal ions between the positive electrode plate and the negative electrode plate. The positive electrode plate comprises a positive current collector and a positive active material layer. A surface of the positive current collector is coated with the positive active material layer. The positive current collector comprises a positive current collecting portion and a positive tab, the positive current collecting portion being coated with the positive active material layer, and the positive tab being not coated with the positive active material layer. Taking a lithium-ion battery as an example, the positive current collector may be made of aluminum, and the positive active material layer comprises a positive active material which may be lithium cobalt oxides, lithium iron phosphate, ternary lithium, lithium manganate, etc. The negative electrode plate comprises a negative current collector and a negative active material layer. A surface of the negative current collector is coated with the negative active material layer. The negative current collector comprises a negative current collecting portion and a negative tab, the negative current collecting portion being coated with the negative active material layer, and the negative tab being not coated with the negative active material layer. The negative current collector may be made of copper, and the negative active material layer comprises a negative active material which may be carbon, silicon, etc. The separator may be made of polypropylene (PP), polyethylene (PE), etc.

The battery cell further comprises: a shell for accommodating the electrode assembly, and an electrode terminal. The electrode terminal is mounted to the shell, and the electrode terminal is configured to be electrically connected to the electrode assembly to implement charging and discharging of the electrode assembly.

The battery cell is further provided with a filling hole, which communicates the interior and the exterior of the battery cell and is configured to fill an electrolyte from the exterior to the interior. After the electrode assembly, the electrode terminal and a housing are assembled, the electrolyte is filled into the shell through the filling hole, and after the first charge and discharge (i.e., formation), the filling hole is sealed with a sealing member.

The filling hole is often provided in the shell, and after the filling, the sealing member (e.g., a sealing screw) is arranged on the shell by pull-riveting to seal the filling hole. During the pull-riveting, the shell is easily deformed under stress, resulting in reduced sealing performance at the filling hole to cause liquid leakage. In order to prevent deformation of the shell, there is also a sealing method in which a sealing member with a sheet structure is provided in the filling hole. However, the sealing member with a sheet structure is easy to tilt to bend upward or shift, resulting in reduced sealing performance at the filling hole to cause liquid leakage. The liquid leakage of the battery cell will seriously shorten the service life and reduce the safety of the battery.

In order to solve the problem of liquid leakage of the battery cell and prolong the service life and improve the safety of the battery cell, the present application provides a solution in which a filling hole is provided in the electrode terminal, the filling hole penetrates in an axial direction P of the electrode terminal, a sealing member is connected to the electrode terminal to seal the filling hole, the electrode terminal has a larger thickness and higher strength in the axial direction and is not easily deformed and not easy to affect the sealing performance. Moreover, the filling hole is configured to comprise a first hole section and a second hole section, the second hole section being closer to the interior of the battery cell than the first hole section, and the second hole section having a smaller hole diameter than the first hole section; and the sealing member is configured to comprise a body and a limiting protrusion, the body fitting with the first hole section in a sealing manner, and the limiting protrusion being formed on the side of the body that faces the interior of the battery cell. The fitting between the limiting protrusion and the second hole section prevents the body from tilting to ensure that a peripheral face of the body fits with a hole wall of the second hole section, so as to improve the sealing performance at the filling hole to alleviate the problem of liquid leakage of the battery cell, thereby prolonging the service life and improving the safety of the battery cell.

The technical solutions described in the embodiments of the present application are applicable to a battery and a power consuming apparatus using the battery.

The power consuming apparatus may be a vehicle, a mobile phone, a portable apparatus, a notebook computer, a ship, a spacecraft, an electric toy, an electric tool, etc. The vehicle may be a fuel vehicle, a gas vehicle or a new energy vehicle. The new energy vehicle may be a battery electric vehicle, a hybrid electric vehicle, an extended range electric vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembly electric tool, and a railway electric tool, such as an electric drill, an electric grinder, an electric wrench, an electric screwdriver, an electric hammer, an electric impact drill, a concrete vibrator, and an electric planer. The power consuming apparatuses mentioned above are not specially limited in the embodiments of the present application.

For ease of description, an example in which the power consuming apparatus is a vehicle 1000 is taken for description in the following embodiments.

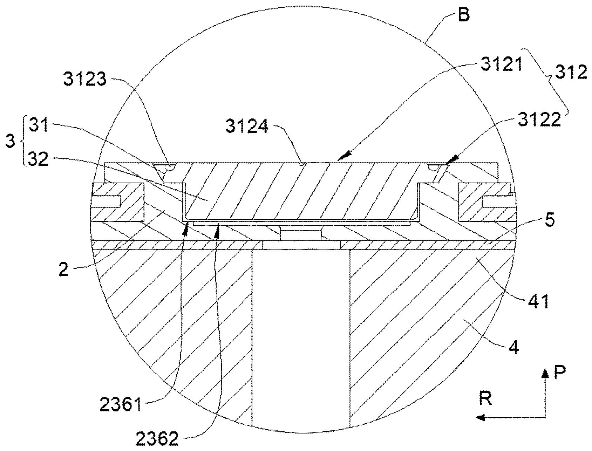

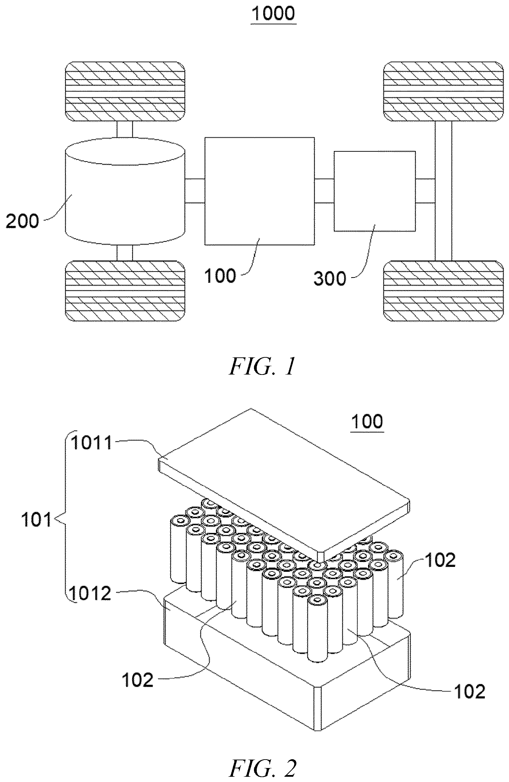

The vehicle 1000 may be a fuel vehicle, a gas vehicle, or a new energy vehicle. The new energy vehicle may be a battery electric vehicle, a hybrid electric vehicle, an extended range electric vehicle, etc. As shown in FIG. 1, the vehicle 1000 may be internally provided with a battery 100, a controller 300, and a motor 200. The controller 300 is configured to control the battery 100 to supply power to the motor 200. For example, the battery 100 may be provided at the bottom, the head, or the tail of the vehicle 1000. The battery 100 may be configured to supply power to the vehicle 1000. For example, the battery 100 may serve as an operating power source for the vehicle 1000 and is used in a circuit system of the vehicle 1000 to meet the working power demand of the vehicle 1000, for example, during startup, navigation and running. In another embodiment of the present application, the battery 100 may not only serve as an operation power source for the vehicle 1000, but also serve as a driving power source for the vehicle 1000, instead of or partially instead of fuel or natural gas, to supply driving power to the vehicle 1000.

In order to meet different power demands, as shown in FIG. 2, the battery 100 may comprise a plurality of battery cells 102, wherein the plurality of battery cells 102 are in series connection, parallel connection or series-parallel connection. The series-parallel connection refers to a combination of series connection and parallel connection. The battery 100 may also be referred to as a battery 100 pack. Optionally, the plurality of battery cells 102 may be in series connection, parallel connection or series-parallel connection to form a battery module, and then a plurality of battery modules are in series connection or in parallel connection or in series-parallel connection to form the battery 100. That is to say, the plurality of battery cells 102 may directly form a battery 100 or may form a battery module, and then the battery modules form the battery 100.

The battery 100 may further comprise a case 101 (or referred as an enclosure), the interior of the case 101 being of a hollow structure, and the plurality of battery cells 102 being accommodated in the case 101. The case 101 may comprise two portions for accommodation (see FIG. 2), which are respectively referred to herein as a first case portion 1011 and a second case portion 1012, the first case portion 1011 and the second case portion 1012 being fastened together. The first case portion 1011 and the second case portion 1012 may be shaped depending on the shape of a combination of the plurality of battery cells 102, the first case portion 1011 and the second case portion 1012 may each have an opening. For example, both the first case portion 1011 and the second case portion 1012 may be a hollow cuboid and have only one side with an opening, the opening of the first case portion 1011 being arranged opposite the opening of the second case portion 1012, and the first case portion 1011 and the second case portion 1012 are fastened to each other to form the case 101 having a closed chamber. One of the first case portion 1011 and the second case portion 1012 may be a cuboid having an opening, and the other may have a cover plate structure to close the opening of the cuboid. The plurality of battery cells 102 are combined in parallel connection, in series connection or in series-parallel connection, and then placed in the case 101 formed by the first case portion 1011 and the second case portion 1012 fastened together.

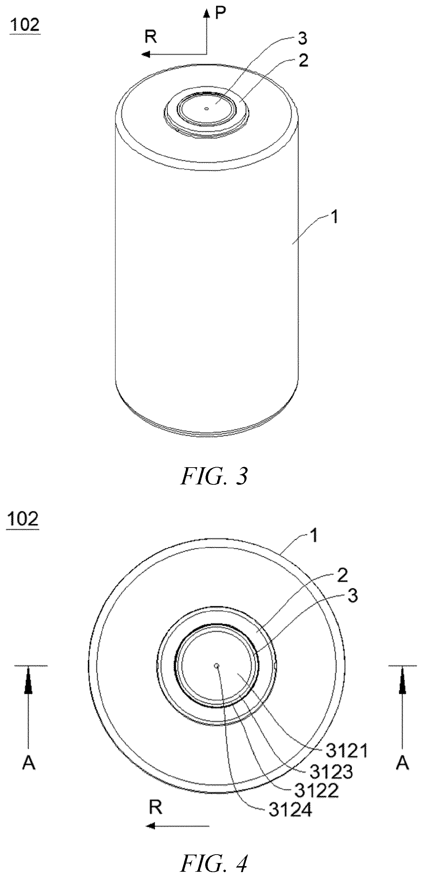

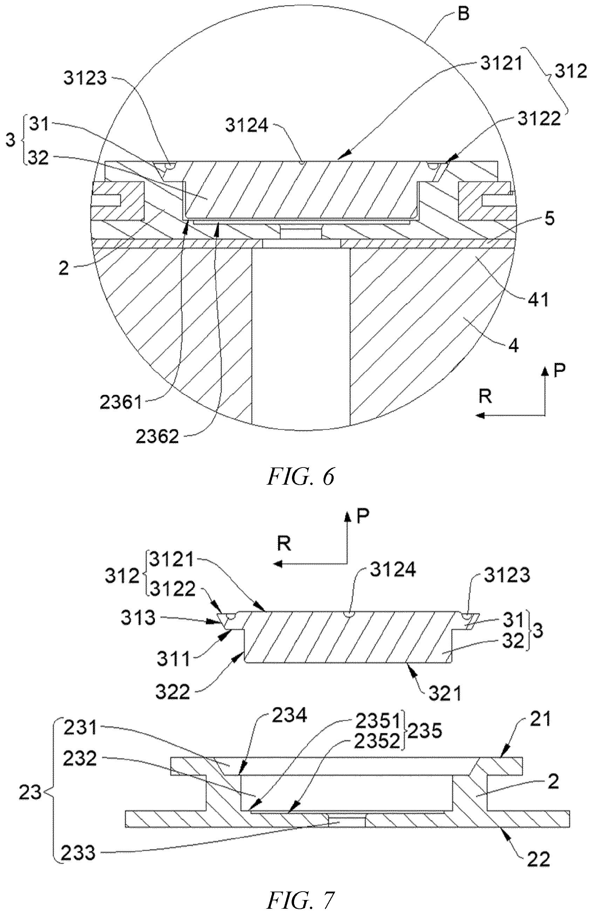

A detailed description will be provided blow for any battery cell 102. As shown in FIGS. 3, 4, and 5, the battery cell 102 comprises a shell 1, an electrode terminal 2, and a sealing member 3, the shell 1 comprising a wall portion, and the electrode terminal 2 being arranged on the wall portion. As shown in FIGS. 6 and 7, the electrode terminal 2 has a filling hole 23 penetrating in an axial direction P of the electrode terminal, the filling hole 23 comprising a first hole section 231 and a second hole section 232, the second hole section 232 being closer to the interior of the battery cell 102 than the first hole section 231, and the second hole section 232 having a smaller hole diameter than the first hole section 231. The sealing member 3 is configured to seal the filling hole 23. The sealing member 3 comprises a body 31 and a limiting protrusion 32. The body 31 fits with the first hole section 231 in a sealing manner, and the body 31 comprises a first surface 311 and a second surface 312 arranged opposite each other in the axial direction P, the first surface 311 facing the interior of the battery cell 102, and the second surface 312 facing away from the interior of the battery cell 102. The limiting protrusion 32 is formed on the first surface 311 and fits with the second hole section 232.

The interior of the shell 1 forms a space for accommodating the electrode assembly 4. The shell 1 may be shaped depending on the specific shape of the electrode assembly 4. For example, if the electrode assembly 4 has a cylindrical structure, a cylindrical housing may be used as the shell 1; or if the electrode assembly 4 has a cuboid structure, a cuboid housing may be used as the shell 1. For example, both the electrode assembly 4 and the shell 1 are cylindrical.

The shell 1 comprises a housing and an end cap 13. The housing comprises a side wall 12 and a bottom wall 11. The side wall 12 is arranged around the bottom wall 11, with one end of the side wall 12 being connected to the bottom wall 11, and the other end of the side wall 12 enclosing an opening arranged opposite the bottom wall 11. The end cap 13 covers the opening to form a closed space that is the space for accommodating the electrode assembly 4. The wall portion is the bottom wall 11 or the end cap 13. The accompanying drawings of the present application show the embodiments in which the wall portion is the bottom wall 11, but in other embodiments, the wall portion may also be the end cap 13.

In some embodiments, the wall portion is provided with an electrode lead-out hole through which the electrode terminal 2 passes, and a gap between a peripheral face of the electrode terminal 2 and an inner wall of a through hole is filled with the elastic sealing member 3 to achieve sealing. Optionally, the elastic sealing member 3 is made of an insulating elastic polymer material to achieve insulation between the wall portion and the electrode terminal 2. In other embodiments, a local region of the wall portion may also be thickened to form the electrode terminal 2.

The axial direction P of the electrode terminal 2 is perpendicular to the wall portion, and the electrode terminal 2 has a first end and a second end in the axial direction P of the electrode terminal, the first end having a first end face 21, the second end having a second end face 22, and the first end face 21 and the second end face 22 being arranged opposite each other in the axial direction P, wherein the first end extends out of the shell 1 to allow the first end face 21 to face away from the interior of the battery cell 102, and the second end is located in the shell 1 to allow the second end face 22 to face the interior of the battery cell 102.

The filling hole 23 extends from the first end to the second end of the electrode terminal 2 and penetrates the first end face 21 and the second end face 22 to achieve communication between the interior and the exterior of the battery cell 102. The filling hole 23 is a stepped hole and comprises a first hole section 231 and a second hole section 232, the first hole section 231 having a larger hole diameter, the second hole section 232 having a smaller hole diameter, the hole wall of the first hole section 231 being connected to the hole wall of the second hole section 232 via a step face 234, and the step face 234 facing away from the interior of the battery cell 102.

The sealing member 3 comprises a body 31 and a limiting protrusion 32, the body 31 being configured to be connected to the electrode terminal 2 to seal the filling hole 23, and the limiting protrusion 32 being configured to prevent the body 31 from tilting up or shifting.

An outer surface of the body 31 comprises a first surface 311, a second surface 312 and a first peripheral face 313. The first surface 311 and the second surface 312 are arranged opposite each other in the axial direction P, the first surface 311 faces the interior of the battery cell 102, and the second surface 312 faces away from the interior of the battery cell 102. In other words, the second surface 312 is the side of the body 31 exposed outside the battery cell 102, and the first peripheral face 313 is connected around the central axis of the body 31 and is connected to the first surface 311 and the second surface 312. The central axis of the body 31 extends in the axial direction P. The first peripheral face 313 of the body 31 fits with and is connected to the hole wall of the first hole section 231 to achieve sealing.

"The limiting protrusion 32 is formed on the first surface 311" means that the limiting protrusion 32 protrudes from the first surface 311, in the axial direction P, towards the interior of the battery cell 102. The limiting protrusion 32 comprises a second peripheral face 322 and a third surface 321, the third surface 321 facing away from the first surface 311 of the body 31 and facing the interior of the battery cell 102, and the second peripheral face 322 being connected to the third surface 321 and the first surface 311 of the body 31.

The limiting protrusion 32 extends to the second hole section 232 to fit with the second hole section 232, and the limiting protrusion 32 may be in an interference-fit or a clearance-fit with the second hole section 232. That is to say, the second peripheral face 322 of the limiting protrusion 32 and the hole wall of the second hole section 232 may completely fit with each other or have a gap therebetween.

When the second peripheral face 322 of the limiting protrusion 32 completely fits with the hole wall of the second hole section 232, the limiting protrusion 32 also has a certain sealing function to prevent the electrolyte from entering the second hole section 232, thereby improving the sealing performance to further alleviate the problem of electrolyte leakage.

When there is a gap between the second peripheral face 322 of the limiting protrusion 32 and the hole wall of the second hole section 232, it is convenient for the limiting protrusion 32 to enter the second hole section 232, which allows the hole diameter of the second hole section 232 and the diameter of the limiting protrusion 32 to have a certain manufacturing tolerance, and further allows the direction of the limiting protrusion 32 entering the second hole section 232 to slightly incline relative to the axial direction P, so that the limiting protrusion is not easy to get stuck even if slightly tilted and can return to the state of being coaxial with the second hole section 232 under the action of gravity.

In the embodiment of the present application, the body 31 and the limiting protrusion 32 are connected together to form a sealing member 3, and the limiting protrusion 32 and the body 31 are blocked by an inner wall of the second hole section 232 and thus cannot move out of the filling hole 23 in a radial direction R (i.e., not easy to shift), and the limiting protrusion 32 is also not easy to tilt, so that the body 31 is also not easy to tilt, which effectively prevents the body 31 from tilting up and ensures that the peripheral face of the body 31 fits with the hole wall of the first hole section 231, so as to improve the sealing performance of the filling hole 23 to alleviate the problem of liquid leakage of the battery cell 102, thereby prolonging the service life and improving the safety of the battery cell 102.

It should be noted that the axial direction P mentioned in the present application refers to an extension direction of the central axis of the electrode terminal 2, and the radial direction R mentioned in the present application refers to a direction perpendicular to the central axis of the electrode terminal 2. In this embodiment, the filling hole 23 is coaxially provided in the electrode terminal 2, that is, the filling hole 23 is located at the axis of the electrode terminal 2. In other embodiments, the filling hole 23 may not be located at the axis of the electrode terminal 2, only the extension direction of the filling hole 23 is parallel to the axial direction P of the electrode terminal 2.

In this embodiment, the body 31 and the limiting protrusion 32 are coaxially arranged, and the sealing member 3 is coaxial with the electrode terminal 2 and the filling hole 23.

The body 31 is connected to the electrode terminal 2 in many ways, such as bonding and welding. For example, a conductive adhesive is provided between the first peripheral face 313 of the body 31 and the hole wall of the first hole section 231 for bonding.

According to some embodiments of the present application, the first peripheral face 313 of the body 31 is welded to the hole wall of the first hole section 231.

There are many welding methods, such as penetration welding, thermofusion welding, and butt-welding. For example, the sealing member 3 is provided in the filling hole 23, so that the first peripheral face 313 of the body 31 and the hole wall of the first hole section 231 fit with each other and are butt-welded at a fitting interface.

The welding method is high in machining speed, and can improve the production efficiency.

According to some embodiments of the present application, the second surface 312 comprises a central region 3121 and an edge region 3122, the central region 3121 being configured to be connected to a busbar component. The second surface 312 is provided with a first recess 3123, the first recess 3123 being arranged around the periphery of the central region 3121, and the edge region 3122 being arranged around the periphery of the first recess 3123.

The busbar component is a component of the battery 100 that is configured to implement electrical connection (such as parallel connection, series connection or series-parallel connection) between the plurality of battery cells 102. Specifically, the busbar component may implement electrical connection between the battery cells 102 by means of connecting electrode terminals 2 of the battery cells 102.

In the above solution, the sealing member 3 is not only configured as a component that seals the filling hole 23, but also configured to implement electrical connection between the electrode terminal 2 and the busbar component. The first recess 3123 is provided between the central region 3121 and the edge region 3122 of the second surface 312, and the edge region 3122 is connected to the first peripheral face 313 of the body 31, so that the first recess 3123 separates the central region 3121 from the edge region 3122. The first recess 3123 is configured to release welding stress between the first peripheral face 313 and the inner wall of the first hole section 231 so as to prevent deformation of the central region 3121, which ensures that the central region 3121 is flat and thus pseudo soldering is less likely to occur during welding of the central region 3121 to the busbar component, thereby ensuring stable and reliable connection between the central region 3121 and the busbar component and achieving good overcurrent capacity.

On the other hand, the central region 3121 of the second surface 312 is configured to be connected to the busbar component, which can reduce the area of the first end face 21 of the electrode terminal 2, so that the hole diameter of the filling hole 23 can be set larger, thereby effectively improving the filling efficiency.

According to some embodiments of the present application, the projection of the limiting protrusion 32 on the second surface 312 in the axial direction P is located in the central region 3121.

The limiting protrusion is arranged at a position corresponding to the position of the central region 3121, which strengths the structural strength of the central region 3121 and thus further achieve the function of preventing deformation of the central region 3121.

According to some embodiments of the present application, the edge region 3122 is recessed towards the interior of the battery cell 102 in the axial direction P relative to the central region 3121.

The edge region 3122 of the body 31 is configured to recess relative to the adjacent central region 3121, the recess can accommodate a weld seam between the body 31 and the electrode terminal 2 to prevent the weld seam from being higher than the central region 3121 in the axial direction P, which protects the weld seam and also prevents the raised weld seam from interfering with the busbar component so as to avoid affecting the connection between the busbar component and the central region 3121.

According to some embodiments of the present application, the first end face 21 of the electrode terminal 2 is perpendicular to the axial direction P and faces away from the interior of the battery cell 102, and the central region 3121 is flush with the first end face 21.

The central region 3121 is configured to be flush with the first end face 21, the central region 3121 is not higher than the first end face 21 in the axial direction P and thus does not occupy additional space outside the battery cell 102, and the central region 3121 is also not lower than the first end face 21, which is conducive to fitting the central region 3121 to a surface of the busbar component, so as to ensure the stable and reliable connection between the central region 3121 and the busbar component, thereby improving the overcurrent capacity.

According to some embodiments of the present application, the first peripheral face 313 of the body 31 is a first conical face that has a diameter gradually decreasing in the axial direction P and towards the interior of the battery cell 102, and the hole wall of the first hole section 231 is a second conical face that matches the first conical face.

As shown in FIG. 7, the body 31 is in the shape of a circular truncated cone which has a central axis extending in the axial direction P, the first surface 311 has a smaller area than the second surface 312, the first peripheral face 313 being a first conical face means that the first peripheral face 313 is a flared curved face, and the smaller end of the first peripheral face 313 is connected to the first surface 311, while the larger end of the second peripheral face 322 is connected to the second surface 312. In the axial direction P, the smaller end of the first peripheral face 313 is closer to the interior of the battery cell 102, while the larger end of the first peripheral face 313 is closer to the exterior of the battery cell 102.

The first hole section 231 being a second conical face means that the hole wall of the first hole section 231 is a flared curved face, the first hole section 231 is a flared hole, and the larger end of the first hole section 231 is closer to the exterior of the battery cell 102, while the smaller end of the first hole section 231 is closer to the interior of the battery cell 102 and is connected to the second hole section 232.

The peripheral face of the body 31 and the hole wall of the first hole section 231 are both configured as a conical face that has the function of guiding the sealing member 3 into the filling hole 23 to facilitate assembly. During laser welding, the second conical face can also block and reflect the laser light that propagates in the axial direction P, so as to alleviate the problem of the laser light entering the interior of the battery cell 102 through a gap between the sealing member 3 and the filling hole 23 to avoid burning of functional components inside the battery cell 102.

The first conical face that matches the second conical face means that the first conical face fits with the second conical face. The first conical face and the second conical face fit with each other and thus have a small gap therebetween, which can further prevent reflection and transmission of laser light between the first conical face and the second conical face and thus further alleviate the problem of the laser light entering the interior of the battery cell 102 through the gap between the sealing member 3 and the filling hole 23.

In other embodiments, the body 31 may also be in the shape of a frustum of prism, and the first surface 311 and the second surface 312 being two bottom faces of the frustum of prism opposite to each other, the first surface 311 being the smaller bottom face of the frustum of prism, the second surface 312 being the larger bottom face of the frustum of prism, and the first peripheral face 313 of the body 31 being a side face of the frustum of prism. The internal space of the first hole section 231 is in the shape of a frustum of prism, and the side wall 12 of the first hole section 231 matches the first peripheral face 313.

According to some embodiments of the present application, as shown in FIGS. 4, 5 and 6, the center of the second surface 312 is provided with a second recess 3124.

The central region 3121 is circular, the edge region 3122 and the first recess 3123 are both annular, the central region 3121, the first recess 3123 and the edge region 3122 are concentrically arranged, and the second recess 3124 is provided in the central region 3121 and at the center of the central region 3121.

The second recess 3124 can serve as a support position or a marking position for a welding apparatus, so that the welding of the body 31 and the electrode terminal 2 can be completed by allowing a welding head of the welding apparatus to rotate one circle along the outer circle of the edge region 3122 and with the second recess 3124 as a pivot or the center. The second recess 3124 is provided to facilitate welding.

According to some embodiments of the present application, the second recess 3124 is hemispherical.

As shown in FIG. 7, the second recess 3124 is hemispherical, and an inner wall of the second recess 3124 is a spherical face, which is conducive to rotation of the welding apparatus in the second recess 3124 when the second recess 3124 serves as the support position for the welding apparatus.

According to some embodiments of the present application, as shown in FIG. 7, the filling hole 23 further comprises a third hole section 233, the third hole section 233 being closer to the interior of the battery cell 102 than the second hole section 232, the third hole section 233 having a smaller hole diameter than the second hole section 232, and the limiting protrusion 32 covering the third hole section 233.

The first hole section 231, the second hole section 232 and the third hole section 233 are connected in sequence and have diameters thereof successively reduced. The hole wall of the first hole section 231 is connected to the hole wall of the second hole section 232 via a transition face (i.e., a step face 234), the hole wall of the second hole section 232 is connected to a hole wall of the third hole section 233 via another transition face (i.e., a transition connection face 235), and the end of the first hole section 231 that faces away from the second hole section 232 extends to the first end face 21, and the end of the third hole section 233 that faces away from the second hole section 232 extends to the second end face 22.

The third hole section 233 is provided, so that when an electrolyte overflows from the third hole section 233, the second hole section 232 can hold the overflowing electrolyte, and thus the electrolyte is not easy to overflow to the first hole section 231, which effectively alleviates the corrosion of the electrolyte to the weld seam so as to improve the sealing effect.

According to some embodiments of the present application, the third surface 321 and the transition connection face 235 are arranged opposite each other and have a gap therebetween.

The third surface 321 faces the interior of the battery cell 102, the transition connection face 235 faces the exterior of the battery cell 102, and a gap being provided between the third surface 321 and the transition connection face 235 means that the third surface 321 and the transition connection face 235 are not in contact with each other and have a certain spacing distance therebetween in the axial direction P.

Providing the gap between the third surface 321 and the transition connection face 235 allows the length of the limiting protrusion 32 in the axial direction P and the length of the second hole section 232 to have a certain manufacturing tolerance to prevent over-positioning, so as to ensure that the peripheral face of the body 31 fits with the hole wall of the first hole section 231 and ensure that the first surface 311 of the body 31 can fit with the step face 234, thereby improving the sealing performance between the body 31 and the electrode terminal 2.

According to some embodiments of the present application, the battery cell 102 further comprises an electrode assembly 4, and a first tab 41 is formed at the end of the electrode assembly 4 that faces the wall portion; and the transition connection face 235 comprises a main body region 2351 and a welding region 2352 connected to each other, the welding region 2352 being configured to be welded to the first tab 41, the main body region 2351 being connected to the hole wall of the second hole section 232, the welding region 2352 being connected to the hole wall of the third hole section 233, a first gap 2361 being provided between the main body region 2351 and the third surface 321, and a second gap 2362 being provided between the welding region 2352 and the third surface 321, the second gap 2362 being greater than the first gap 2361.

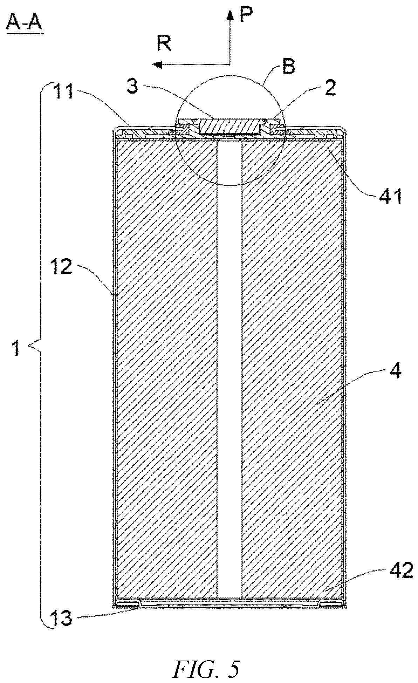

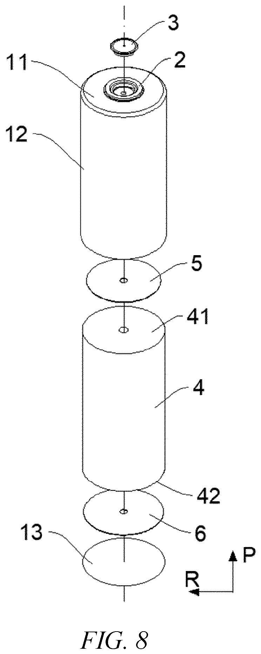

The electrode assembly 4 comprises a first electrode plate, a second electrode plate, and a separator configured to separate the first electrode plate from the second electrode plate. The first electrode plate and the second electrode plate have opposite polarities. In other words, one of the first electrode plate and the second electrode plate is a positive electrode plate, and the other of the first electrode plate and the second electrode plate is a negative electrode plate. The first electrode plate, the second electrode plate and the separator pertain to the prior art. Although they are not shown in the accompanying drawings of the present application, those skilled in the art should understand their specific structures. The first tab 41 and a second tab 42 may extend from the same side of the electrode assembly 4, or may respectively extend from opposite sides. For example, as shown in FIGS. 5 and 8, the first tab 41 and the second tab 42 are respectively located at two ends of the electrode assembly 4. The end of the electrode assembly 4 that has the first tab 41 faces the wall portion, and the end of the electrode assembly 4 that has the second tab 42 faces away from the wall portion. That is, in this embodiment, the end of the electrode assembly 4 that has the first tab 41 faces the bottom wall 11, and the end of the electrode assembly 4 that has the second tab 42 faces the end cap 13. The first tab 41 is electrically connected to the electrode terminal 2, and the second tab 42 is electrically connected to the end cap 13. The electrical connection may be in the way of contact conduction, connection by a conductive adhesive, direct welding, or indirect welding.

Taking the indirect welding between the first tab 41 and the electrode terminal 2 as an example, as shown in FIG. 8, the battery cell 102 further comprises a first adapter 5. The first adapter 5 is welded to the first tab 41, and after the electrode assembly 4 is mounted in the shell 1, the first adapter 5 comes into contact with the second end face 22 of the electrode terminal 2, and the welding head of the welding apparatus acts on the welding region 2352 so as to weld the electrode terminal 2 to the first adapter 5, thereby implementing electrical connection between the first tab 41 and the electrode terminal 2.

Since the second gap 2362 is greater than the first gap 2361, the welding region 2352 is recessed towards the interior of the battery cell 102 in the axial direction P relative to the main body region 2351, so that the welding region 2352 is further away from the third surface 321 of the limiting protrusion to allow a weld seam formed in the welding region 2352 to avoid the limiting protrusion, so as to avoid affecting the positioning accuracy of the sealing member 3, thereby ensuring the sealing performance of the sealing member 3.

In some embodiments, the battery cell 102 further comprises a second adapter 6. The second adapter 6 is welded to the second tab 42, and after the electrode assembly 4 is mounted in the shell 1, the second adapter 6 is in contact conduction with or is welded to the end cap 13.

In a second aspect, as shown in FIG. 2, an embodiment of the present application provides a battery 100, the battery 100 comprising at least one battery cell 102 described in the forgoing solutions. In the battery 100 according to an embodiment of the present application, the battery cell 102 of the battery has good sealing performance and is not easy to leak, and the battery 100 has a long service life and high safety.

In a third aspect, an embodiment of the present application provides a power consuming apparatus which may be, but is not limited to, a vehicle 1000 as shown in FIG. 1, the power consuming apparatus comprising a battery 100 described above. The battery 100 of the power consuming apparatus has a long service life and high safety, and the power consuming apparatus has good durability and is safe to use.

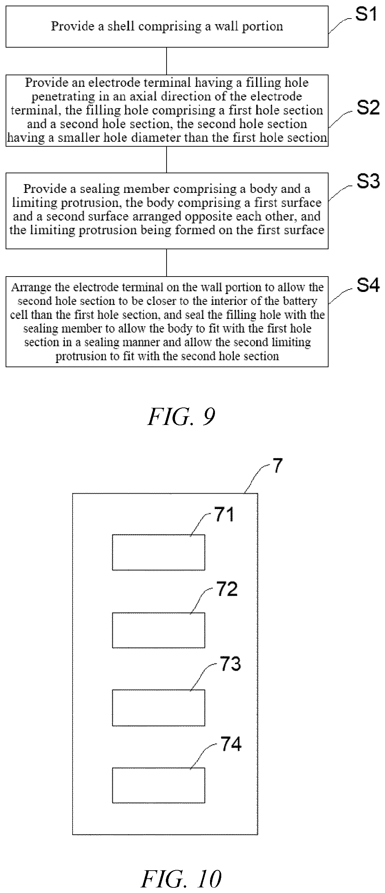

In a fourth aspect, an embodiment of the present application provides a manufacturing method for a battery cell 102. As shown in FIG. 9, the manufacturing method comprises the following steps.

In step S 1, a shell 1 is provided, the shell 1 comprising a wall portion.

In step S2, an electrode terminal 2 is provided, the electrode terminal 2 having a filling hole 23 penetrating in an axial direction P of the electrode terminal, the filling hole 23 comprising a first hole section 231 and a second hole section 232, the second hole section 232 having a smaller hole diameter than the first hole section 231.

In step S3, a sealing member 3 is provided, the sealing member 3 comprising a body 31 and a limiting protrusion 32, the body 31 comprising a first surface 311 and a second surface 312 arranged opposite each other, and the limiting protrusion 32 being formed on the first surface 311.

In step S4, the electrode terminal 2 is provided on the wall portion to allow the second hole section 232 to be closer to the interior of the battery cell 102 than the first hole section 231, and the filling hole 23 is sealed with the sealing member 3 to allow the body 31 to fit with the first hole section 231 in a sealing manner and allow the limiting protrusion 32 to fit with the second hole section 232.

It should be noted that for a related structure of the battery cell 102 manufactured by the foregoing manufacturing method for a battery cell 102, reference may be made to the battery cells 102 according to the foregoing embodiments.

When a battery cell 102 is assembled based on the foregoing manufacturing method for a battery cell 102, it is not necessary to successively perform the steps as described above. That is to say, the steps may be performed in the order mentioned in the embodiments, or the steps may be performed in a different order from the order mentioned in the embodiments, or several steps are performed simultaneously. For example, steps S1, S2 and S3 may be performed in a random order, or may be performed simultaneously.

In a fifth aspect, an embodiment of the present application provides a manufacturing apparatus 7 for a battery cell 102. As shown in FIG. 10, the manufacturing apparatus 7 comprises a first provision device 71, a second provision device 72, a third provision device 73, and an assembly device 74.

The first provision device 71 is configured to provide a shell 1, the shell 1 comprising a wall portion.

The second provision device 72 is configured to provide an electrode terminal 2, the electrode terminal 2 having a filling hole 23 penetrating in an axial direction P of the electrode terminal, the filling hole 23 comprising a first hole section 231 and a second hole section 232, the second hole section 232 having a smaller hole diameter than the first hole section 231.

The third provision device 73 is configured to provide a sealing member 3, the sealing member 3 comprising a body 31 and a limiting protrusion 32, the body 31 comprising a first surface 311 and a second surface 312 arranged opposite each other, and the limiting protrusion 32 being formed on the first surface 311.

The assembly device 74 is configured to arrange the electrode terminal 2 on the wall portion to allow the second hole section 232 to be closer to the interior of the battery cell 102 than the first hole section 231, and is configured to seal the filling hole 23 with the sealing member 3 to allow the body 31 to fit with the first hole section 231 in a sealing manner and allow the limiting protrusion 32 to fit with the second hole section 232.

For a related structure of the battery cell 102 manufactured by the manufacturing apparatus 7 described above, reference may be made to the battery cells 102 according to the foregoing embodiments.

It should be noted that the embodiments in the present application and features in the embodiments may be combined with each other without conflicts.

According to some embodiments of the present application, as shown in FIGS. 3 to 8, an embodiment of the present application provides a cylindrical battery cell 102, the battery cell 102 comprising a shell 1, an electrode assembly 4, an electrode terminal 2, and a sealing member 3. The shell 1 comprises a housing and an end cap 13. The housing comprises a side wall 12 and a bottom wall 11, the side wall 12 being arranged around the bottom wall 11, with one end of the side wall 12 being connected to the bottom wall 11, and the other end of the side wall 12 enclosing an opening arranged opposite the bottom wall 11. The end cap 13 covers the opening to form an accommodating space. The electrode assembly 4 is provided in the accommodating space of the shell 1, and a first tab 41 and a second tab 42 are respectively formed at two ends of the electrode assembly 4 in an axial direction P. The end of the electrode assembly 4 that has the first tab 41 faces the bottom wall 11, and the end of the electrode assembly 4 that has the second tab 42 faces the end cap 13. The electrode terminal 2 is mounted to the bottom wall 11 in an insulating manner, that is, a sealing ring made of an insulating material is provided between the electrode terminal 2 and the bottom wall 11. The electrode terminal 2 is electrically connected to the first tab 41, and the end cap 13 is electrically connected to the second tab 42, so as to implement output and input of electrical energy of the battery cell. The electrode terminal 2 has a filling hole 23 penetrating in the axial direction P of the electrode terminal, and the filling hole 23 is configured to fill a liquid into the interior of the battery cell 102 (i.e., the accommodating space of the shell 1). The filling hole 23 comprises a first hole section 231 and a second hole section 232, the second hole section 232 being closer to the interior of the battery cell 102 than the first hole section 231, and the second hole section 232 having a smaller hole diameter than the first hole section 231. The sealing member 3 is configured to seal the filling hole 23. The sealing member 3 comprises a body 31 and a limiting protrusion 32. The body 31 fits with the first hole section 231 in a sealing manner, and the body 31 comprises a first surface 311 and a second surface 312 arranged opposite each other in the axial direction P, the first surface 311 facing the interior of the battery cell 102, and the second surface 312 facing away from the interior of the battery cell 102. The limiting protrusion 32 is formed on the first surface 311 and fits with the second hole section 232. In the battery cell 102 according to an embodiment of the present application, the filling hole 23 of the battery cell is provided in the electrode terminal 2, so that it is not necessary to provide an additional opening in the shell 1, which effectively improves the structural strength of the shell 1, so that the shell 1 is not easily deformed. The electrode terminal 2 has a thickness greater than that of the shell 1, and the electrode terminal 2 is also not easily deformed when the filling hole 23 is closed. Moreover, the limiting protrusion 32 and the body 31 are blocked by an inner wall of the second hole section 232 and thus not easy to shift or tilt, which effectively prevents the body 31 from tilting up to ensure that the peripheral face of the body 31 fits with the hole wall of the second hole section 232. In this way, it is possible to improve the sealing performance of the filling hole 23 in many ways to alleviate the problem of liquid leakage of the battery cell 102, thereby prolonging the service life and improving the safety of the battery cell 102.

The foregoing descriptions are merely preferred embodiments of the present application, but are not intended to limit the present application. For those skilled in the art, the present application may have various modifications and variations. Any modifications, equivalent substitutions, improvements, and the like made within the spirit and principle of the present application should fall within the scope of protection of the present application.

## Claims

1. A battery cell, comprising:
a shell comprising a wall portion;
an electrode terminal provided on the wall portion, the electrode terminal having a filling hole penetrating in an axial direction of the electrode terminal, the filling hole comprising a first hole section and a second hole section, the second hole section being closer to the interior of the battery cell than the first hole section, and the second hole section having a smaller hole diameter than the first hole section; and
a sealing member configured to seal the filling hole, the sealing member comprising a body and a limiting protrusion, the body fitting with the first hole section in a sealing manner, the body comprising a first surface and a second surface arranged opposite each other in the axial direction, the first surface facing the interior of the battery cell, the second surface facing away from the interior of the battery cell, and the limiting protrusion being formed on the first surface and fitting with the second hole section.

2. The battery cell according to claim 1, wherein the body further comprises a peripheral face that connects the first surface and the second surface, the peripheral face being welded to a hole wall of the first hole section.

3. The battery cell according to claim 2, wherein the second surface comprises a central region and an edge region, the central region being configured to be connected to a busbar component, the second surface being provided with a first recess that is arranged around the periphery of the central region, and the edge region being arranged around the periphery of the first recess.

4. The battery cell according to claim 3, wherein the projection of the limiting protrusion on the second surface in the axial direction is located in the central region.

5. The battery cell according to claim 3 or 4, wherein the edge region is recessed towards the interior of the battery cell in the axial direction relative to the central region.

6. The battery cell according to any one of claims 3 to 5, wherein the electrode terminal comprises a first end face that is perpendicular to the axial direction and faces away from the interior of the battery cell, and the central region is flush with the first end face.

7. The battery cell according to any one of claims 2 to 6, wherein the peripheral face is a first conical face that has a diameter gradually decreasing in the axial direction and towards the interior of the battery cell, and the hole wall of the first hole section is a second conical face that matches the first conical face.

8. The battery cell according to any one of claims 1 to 7, wherein the center of the second surface is provided with a second recess.

9. The battery cell according to claim 8, wherein the second recess is hemispherical.

10. The battery cell according to any one of claims 1 to 9, wherein the filling hole further comprises a third hole section that is closer to the interior of the battery cell than the second hole section, the third hole section having a smaller hole diameter than the second hole section, and the limiting protrusion covering the third hole section.

11. The battery cell according to claim 10, wherein the limiting protrusion comprises a third surface that is the side of the limiting protrusion facing the interior of the battery cell in the axial direction; and
a transition connection face is formed between a hole wall of the second hole section and a hole wall of the third hole section, and the transition connection face and the third surface are arranged opposite each other and have a gap therebetween.

12. The battery cell according to claim 11, wherein the battery cell further comprises an electrode assembly, and a first tab is formed at the end of the electrode assembly that faces the wall portion; and
the transition connection face comprises a main body region and a welding region connected to each other, the welding region being configured to be welded to the first tab, the main body region being connected to the hole wall of the second hole section, the welding region being connected to the hole wall of the third hole section, a first gap being provided between the main body region and the third surface, and a second gap being provided between the welding region and the third surface, the second gap being greater than the first gap.

13. A battery, comprising a battery cell according to any one of claims 1 to 12.

14. A power consuming apparatus, comprising a battery according to claim 13.

15. A manufacturing method for a battery cell, the manufacturing method comprising:
providing a shell comprising a wall portion;
providing an electrode terminal having a filling hole penetrating in an axial direction of the electrode terminal, the filling hole comprising a first hole section and a second hole section, the second hole section having a smaller hole diameter than the first hole section;
providing a sealing member comprising a body and a limiting protrusion, the body comprising a first surface and a second surface arranged opposite each other, and the limiting protrusion being formed on the first surface; and
arranging the electrode terminal on the wall portion to allow the second hole section to be closer to the interior of the battery cell than the first hole section, and sealing the filling hole with the sealing member to allow the body to fit with the first hole section in a sealing manner and allow the limiting protrusion to fit with the second hole section.

16. A manufacturing apparatus for a battery cell, the manufacturing apparatus comprising:
a first provision device configured to provide a shell comprising a wall portion;
a second provision device configured to provide an electrode terminal having a filling hole penetrating in an axial direction of the electrode terminal, the filling hole comprising a first hole section and a second hole section, the second hole section having a smaller a hole diameter than the first hole section;
a third provision device configured to provide a sealing member comprising a body and a limiting protrusion, the body comprising a first surface and a second surface arranged opposite each other, and the limiting protrusion being formed on the first surface; and
an assembly device configured to arrange the electrode terminal on the wall portion to allow the second hole section to be closer to the interior of the battery cell than the first hole section, and configured to seal the filling hole with the sealing member to allow the body to fit with the first hole section in a sealing manner and allow the limiting protrusion to fit with the second hole section.
